# EUROPEAN PATENT APPLICATION

(11) **EP 4 851 823 A1**
(43) Date of publication of application: **09.12.2026**
(21) Application number: 24925481.4
(22) Date of filing: 06.09.2024
(51) Int. Cl.: G06F 16/338

(54) **TOPIC-BASED STORY GENERATION METHOD AND APPARATUS, AND SERVER AND TERMINAL DEVICE**

(30) Priority: 21.02.2024 CN 202410195948
(71) Applicant: HUAWEI TECHNOLOGIES CO., LTD., Shenzhen, Guangdong 518129 (CN)
(72) Inventor: CAO, Huan, Shenzhen, Guangdong 518129 (CN); SHEN, Xin, Shenzhen, Guangdong 518129 (CN); LEONG, CheeKai, Shenzhen, Guangdong 518129 (CN); LU, Dongcai, Shenzhen, Guangdong 518129 (CN); HE, Jun, Shenzhen, Guangdong 518129 (CN); XIA, Mingzhen, Shenzhen, Guangdong 518129 (CN)
(74) Representative: Huawei European IPR
(86) International application number: PCT/CN2024/117311
(87) International publication number: WO 2025/175741

(57) **Abstract**

Embodiments of this application provide a feature story generation method and apparatus, a server, and a terminal device. In the foregoing method, the terminal device obtains, in response to an operation performed by a user on a currently presented news interface, a news topic selected by the user, and presents a news topic interface. The terminal device then obtains a time period and a news media source that are set by the user on the news topic interface, presents milestone events of the news topic based on the time period and the news media source, and finally obtains a milestone event selected by the user from the presented milestone events, and sends, to the server, the news topic, the time period, the news media source, and the milestone event selected by the user. In this way, the server can generate a feature story corresponding to the news topic, so that when the user browses news, an interactive and real-time customized feature story generation function can be provided to help the user extract core information and improve news viewing experience of the user.

## Description

This application claims priority to Chinese Patent Application No. 202410195948.0, filed with the China National Intellectual Property Administration on February 21, 2024 and entitled "FEATURE STORY GENERATION METHOD AND APPARATUS, SERVER, AND TERMINAL DEVICE", which is incorporated herein by reference in its entirety.

### TECHNICAL FIELD

Embodiments of this application relate to the field of intelligent terminal technologies, and in particular, to a feature story generation method and apparatus, a server, and a terminal device.

### BACKGROUND

In the era of explosive growth of information on the Internet, for hot events, identical or similar news is pushed to users through different channels, but in fact there is no significant difference in content. Once the hot event passes, the event is overshadowed by other new events, making it difficult for users to find the latest developments of the event in time. The former affects efficiency of obtaining news information by users, and the latter affects users' ability to objectively obtain the complete picture and development process of the event. Therefore, how to use computer technology to help users automatically summarize complete event-related news and present the content to users in an objective, all-round and multi-level manner through an appropriate page is a subject worth studying.

Existing technologies provide some news topic generation solutions. However, most of existing solutions focus on automated topic screening and presentation of multi-source news, and lack quick content summarization and overview of related news.

### SUMMARY

Embodiments of this application provide a feature story generation method and apparatus, a server, and a terminal device, and embodiments of this application further provide a computer-readable storage medium, so that when a user browses news, an interactive, real-time customized, and granularity-variable feature story generation function can be provided to help the user extract core information and improve viewing experience of the user.

According to a first aspect, an embodiment of this application provides a feature story generation method, including: obtaining, in response to an operation performed by a user on a currently presented news interface, a news topic selected by the user on the news interface; presenting a news topic interface selected by the user; obtaining a time period and a news media source that are set by the user on the news topic interface; presenting milestone events of the news topic on the news topic interface based on the time period and the news media source; obtaining a milestone event selected by the user from the presented milestone events; and sending, to a server, the news topic, the time period, the news media source, and the milestone event selected by the user, to enable the server to generate a feature story corresponding to the news topic based on the time period, the news media source, and the milestone event selected by the user.

In the feature story generation method, a terminal device obtains, in response to the operation performed by the user on the currently presented news interface, the news topic selected by the user on the news interface, and presents the news topic interface selected by the user. The terminal device then obtains the time period and the news media source that are set by the user on the news topic interface, and presents the milestone events of the news topic on the news topic interface based on the time period and the news media source. Finally, the terminal device obtains the milestone event selected by the user from the presented milestone events, and sends, to the server, the news topic, the time period, the news media source, and the milestone event selected by the user. In this way, the server may generate the feature story corresponding to the news topic based on the time period, the news media source, and the milestone event selected by the user, so that when the user browses news, an interactive and real-time customized feature story generation function can be provided to help the user extract core information and improve news viewing experience of the user.

In a possible implementation, before the presenting the milestone events of the news topic on the news topic interface based on the time period and the news media source, the method further includes: obtaining granularity set by the user on the news topic interface; and the presenting the milestone events of the news topic on the news topic interface based on the time period and the news media source includes: presenting a first quantity of milestone events of the news topic on the news topic interface based on the time period and the news media source, where the first quantity includes a quantity corresponding to the granularity.

In a possible implementation, the method further includes: generating a language style tag of the user; and sending the language style tag of the user to the server, where the feature story that corresponds to the news topic and that is generated by the server includes a feature story that corresponds to the news topic and that matches a language style of the user.

In a possible implementation, the generating the language style tag of the user includes: generating the language style tag of the user based on a historical behavior and a usage habit of the user; or obtaining a language style selected by the user on the news topic interface, and generating the language style tag of the user based on the language style selected by the user.

In a possible implementation, after the sending, to the server, the news topic, the time period, the news media source, and the milestone event selected by the user, the method further includes: receiving the feature story that corresponds to the news topic and that is sent by the server; and presenting the feature story on the news topic interface.

In a possible implementation, after the presenting the feature story on the news topic interface, the method further includes: obtaining a milestone event re-selected by the user from the presented milestone events; and sending, to the server, the milestone event re-selected by the user, to enable the server to update the feature story corresponding to the news topic based on the milestone event re-selected by the user.

In a possible implementation, after the presenting the feature story on the news topic interface, the method further includes: obtaining a time period and/or a news media source modified by the user on the news topic interface; presenting updated milestone events on the news topic interface based on the modified time period and/or news media source; obtaining a milestone event re-selected by the user from the updated milestone events; and sending, to the server, the milestone event re-selected by the user and the modified time period and/or news media source, to enable the server to update the feature story corresponding to the news topic based on the milestone event re-selected by the user and the modified time period and/or news media source.

According to a second aspect, an embodiment of this application provides a feature story generation method, including: A server receives a news topic, a time period, a news media source, and a milestone event that are selected by a user and that are sent by a terminal device; generating a prompt based on the news topic, the time period, the news media source, and the milestone event; and generating a feature story corresponding to the news topic based on the prompt.

In a possible implementation, the method further includes: receiving a language style tag of the user sent by the terminal device; and the generating the feature story corresponding to the news topic based on the prompt includes: generating, based on the prompt, a feature story that corresponds to the news topic and that matches the language style tag of the user.

In a possible implementation, after the generating the feature story corresponding to the news topic based on the prompt, the method further includes: sending the feature story to the terminal device, to enable the terminal device to present the feature story on a news topic interface.

In a possible implementation, after the sending the feature story to the terminal device, the method further includes: receiving a milestone event that is re-selected by the user and that is sent by the terminal device; and updating the feature story corresponding to the news topic based on the milestone event re-selected by the user.

In a possible implementation, after the sending the feature story to the terminal device, the method further includes: receiving a milestone event re-selected by the user and a time period and/or a news media source modified by the user, that are sent by the terminal device; and updating the feature story corresponding to the news topic based on the milestone event re-selected by the user and the time period and/or news media source modified by the user.

In the foregoing feature story generation method, the server receives the news topic, the time period, the news media source, and the milestone event that are selected by the user and that are sent by the terminal device, and then generates the prompt based on the news topic, the time period, the news media source, and the milestone event. Finally, the server generates the feature story corresponding to the news topic based on the prompt, so that when the user browses news, an interactive, real-time customized, and granularity-variable feature story generation function can be provided to help the user extract core information and improve viewing experience of the user.

According to a third aspect, an embodiment of this application provides a feature story generation apparatus. The apparatus is included in a terminal device, and the apparatus has a function of implementing the behavior of the terminal device in the first aspect and the possible implementations of the first aspect. The function may be implemented by hardware, or may be implemented by hardware executing corresponding software. The hardware or the software includes one or more modules or units corresponding to the foregoing functions, such as an obtaining module, a presentation module, and a sending module.

According to a fourth aspect, an embodiment of this application provides a feature story generation apparatus. The apparatus is included in a server, and the apparatus has a function of implementing the behavior of the server in the second aspect and the possible implementations of the second aspect. The function may be implemented by hardware, or may be implemented by hardware executing corresponding software. The hardware or the software includes one or more modules or units corresponding to the foregoing functions, such as a receiving module and a generation module.

According to a fifth aspect, an embodiment of this application provides a terminal device, including one or more processors, a memory, a plurality of applications, and one or more computer programs. The one or more computer programs are stored in the memory. The one or more computer programs include instructions. When the instructions are executed by the terminal device, the terminal device is enabled to perform the method provided in the first aspect.

According to a sixth aspect, an embodiment of this application provides a server, including one or more processors, a memory, a plurality of applications, and one or more computer programs. The one or more computer programs are stored in the memory. The one or more computer programs include instructions. When the instructions are executed by the server, the server is enabled to perform the method provided in the second aspect.

It should be understood that technical solutions in the third aspect and the fifth aspect of embodiments of this application are consistent with technical solutions in the first aspect of embodiments of this application, and beneficial effects achieved by the aspects and corresponding feasible implementations are similar. Details are not described again.

It should be understood that technical solutions in the fourth aspect and the sixth aspect of embodiments of this application are consistent with technical solutions in the second aspect of embodiments of this application, and beneficial effects achieved by the aspects and corresponding feasible implementations are similar. Details are not described again.

According to a seventh aspect, an embodiment of this application provides a computer-readable storage medium. The computer-readable storage medium stores a computer program. When the computer program is run on a computer, the computer is enabled to perform the method provided in the first aspect.

According to an eighth aspect, an embodiment of this application provides a computer-readable storage medium. The computer-readable storage medium stores a computer program. When the computer program is run on a computer, the computer is enabled to perform the method provided in the second aspect.

According to a ninth aspect, an embodiment of this application provides a computer program. When executed by a computer, the computer program is used for performing the method provided in the first aspect.

According to a tenth aspect, an embodiment of this application provides a computer program. When executed by a computer, the computer program is used for performing the method provided in the second aspect.

In a possible design, the programs in the ninth aspect and the tenth aspect may be all or partially stored in a storage medium that is encapsulated with a processor, or may be all or partially stored in a memory that is not encapsulated with a processor.

### BRIEF DESCRIPTION OF DRAWINGS

FIG. 1 is a diagram of a structure of a terminal device according to an embodiment of this application;
FIG. 2 is a diagram of a structure of a server according to an embodiment of this application;
FIG. 3 is a diagram of a module selection interface according to an embodiment of this application;
FIG. 4 is a diagram of a feature story interface according to an embodiment of this application;
FIG. 5 is a diagram of a system architecture according to an embodiment of this application;
FIG. 6 is a flowchart of a feature story generation method according to an embodiment of this application;
FIG. 7 is a flowchart of a feature story generation method according to another embodiment of this application;
FIG. 8 is a flowchart of a feature story generation method according to still another embodiment of this application;
FIG. 9 is a diagram of a structure of a terminal device according to another embodiment of this application;
FIG. 10 is a diagram of a structure of a terminal device according to still another embodiment of this application;
FIG. 11 is a diagram of a structure of a server according to another embodiment of this application; and
FIG. 12 is a diagram of a structure of a server according to still another embodiment of this application.

### DESCRIPTION OF EMBODIMENTS

Terms used in embodiments of this application are only used to explain specific embodiments of this application, but are not intended to limit this application.

In existing related technologies, how to automatically summarize complete event-related news and present the content to users in an objective, all-round and multi-level manner through a reasonable page is a subject worth studying.

For the foregoing subject, existing related technologies provide a news topic creation solution. A specific process is as follows: First, a plurality of pieces of news information provided by an information provider are obtained, and the plurality of pieces of news information are clustered by using a pre-trained information clustering model, to obtain a plurality of information sets. The plurality of pieces of news information included in each information set correspond to a same news event. A news topic creation system is used to create a corresponding news topic for each news event based on a plurality of pieces of news information corresponding to each news event, and the news topic is used to report a corresponding news event. The foregoing solution can improve efficiency of creating a news topic.

However, in the foregoing solution, the news information is clustered based on the pre-trained news topic clustering model, and the feature is generated on this basis. This solution leads to rigid and uninterpretable summarization and extraction of the news topic, and lacks customized news selection and efficient generation of feature story content.

Existing related technologies further disclose a feature production solution based on a topic library and an event library. The feature production solution specifically includes: obtaining news data within a specified time period; determining a hot word for news within the specified time period based on the news data; generating, based on the news data in which the hot word is located and by using a preset vector generation model, a feature vector of the news data in which the hot word is located; classifying, based on the feature vector, the news data in which the hot word is located, to obtain a plurality of topic libraries; extracting an event from each topic library sequentially to obtain different types of event libraries in each topic library; and producing and generating a corresponding news topic based on the event library.

However, this solution only provides a feature news generation module that is difficult to customize. Although use of news popularity data is increased, support for user requirements to customize news browsing is lacking, making it difficult to meet customized selection of a time segment, a language style, and the like by a user.

To sum up, although there are some feature news selection modules that can be used for news browsing in a form of feature pages, the following prominent problems exist.
1. Lack of quick content summarization and efficient information overview of related news: In conventional technologies, automated feature screening and presentation are generally performed on multi-source news, and a highly generalized feature story cannot be generated in real time.
2. Lack of a user-interactive, real-time customized, and granularity-variable news time selection function: In conventional technologies, automated news selection based on news content and themes is mostly implemented. This cannot meet dynamic and variable personalized browsing requirements of users.
3. Lack of adaptation to behavioral preferences of users in news browsing: In conventional technologies, when news is shared or information is provided, content cannot be optimized or adapted based on user preferences such as a language style of a user.

Embodiments of this application provide a feature story generation method. An efficient, all-round, multi-level, and personalized feature story generation method is proposed in a manner of device-cloud synergy based on an artificial intelligence generated content (artificial intelligence generated content, AIGC) technology, to meet news browsing requirements of different users in different scenarios and improve information obtaining efficiency and richness in all aspects.

For feature story generation, embodiments of this application may provide multi-theme and structured news event division, including a customized time interval, a news media source, a news keyword, a language style of a user, and/or the like.

For feature story generation, embodiments of this application may provide real-time feature story content generation, to help users meet efficient and customized news browsing requirements.

The feature story generation method provided in embodiments of this application may be applied to a terminal device. The terminal device may be a smartphone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). A specific type of the terminal device is not limited in embodiments of this application.

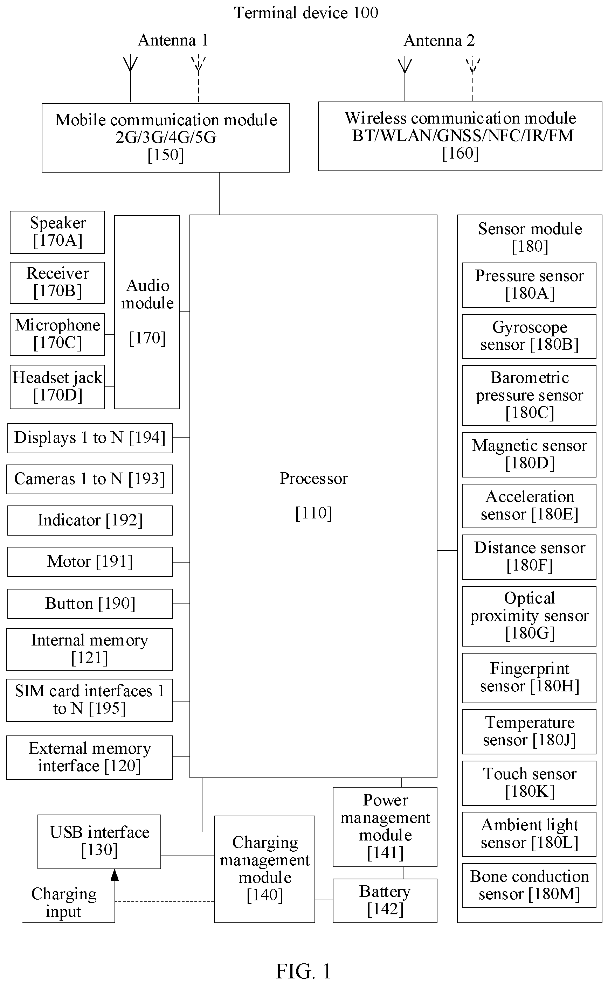

For example, FIG. 1 is a diagram of a structure of a terminal device according to an embodiment of this application. As shown in FIG. 1, the terminal device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure shown in this embodiment of this application does not constitute a specific limitation on the terminal device 100. In some other embodiments of this application, the terminal device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the terminal device 100. The charging management module 140 may further supply power to the terminal device 100 by using the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the terminal device 100 may be implemented by the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the terminal device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution applied to the terminal device 100 for wireless communication including 2G/3G/4G/5G and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. The demodulator then transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video on the display 194. In some embodiments, the modem processor may be an independent device. In some other embodiments, the modem processor may be independent of the processor 110, and is disposed in a same device as the mobile communication module 150 or another functional module.

The wireless communication module 160 may provide a solution applied to the terminal device 100 for wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processing module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the terminal device 100, the antenna 1 is coupled to the mobile communication module 150, and the antenna 2 is coupled to the wireless communication module 160, so that the terminal device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The terminal device 100 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change displayed information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the terminal device 100 may include one or N displays 194, where N is a positive integer greater than 1.

The terminal device 100 may implement a photographing function through the ISP, the camera 193, the video codec, the GPU, the display 194, the application processor, and the like.

The ISP may be configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scene. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD), or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the terminal device 100 may include one or N cameras 193, where N is a positive integer greater than 1.

The digital signal processor is configured to process a digital signal, and may process another digital signal in addition to the digital image signal. For example, when the terminal device 100 selects a frequency, the digital signal processor is configured to perform Fourier transform on frequency energy.

The video codec is configured to compress or decompress a digital video. The terminal device 100 may support one or more video codecs. In this way, the terminal device 100 may play or record videos in a plurality of coding formats, such as moving picture experts group (moving picture experts group, MPEG) 1, MPEG 2, MPEG 3, and MPEG 4.

The NPU is a neural-network (neural-network, NN) computing processor, and quickly processes input information by emulating a biological neural network structure, for example, by emulating a mode of transfer between human-brain neurons, and may further perform self-learning constantly. Intelligent cognition applications, such as image recognition, facial recognition, speech recognition, and text understanding, of the terminal device 100 may be implemented through the NPU.

The external memory interface 120 may be configured to connect to an external storage card, for example, a micro SD card, to extend a storage capability of the terminal device 100. The external storage card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a sound playing function or an image playing function), and the like. The data storage area may store data (for example, audio data and a phone book) and the like created when the terminal device 100 is used. In addition, the internal memory 121 may include a high-speed random access memory, or may include a nonvolatile memory, for example, at least one magnetic disk storage device, a flash memory device, or a universal flash storage (universal flash storage, UFS). The processor 110 runs the instructions stored in the internal memory 121 and/or the instructions stored in the memory disposed in the processor, to implement various function applications and data processing of the terminal device 100.

The terminal device 100 may implement an audio function, for example, music playing or recording through the audio module 170, the speaker 170A, the receiver 170B, the microphone 170C, the headset jack 170D, the application processor, and the like.

The audio module 170 is configured to convert digital audio information into an analog audio signal for output, and is further configured to convert an analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "horn", is configured to convert an audio electrical signal into a sound signal. The terminal device 100 may be used to listen to music or answer a call in a hands-free mode through the speaker 170A.

The receiver 170B, also referred to as an "earpiece", is configured to convert an audio electrical signal into a sound signal. When a call is answered or voice information is listened to through the terminal device 100, the receiver 170B may be put close to a human ear to listen to a voice.

The microphone 170C, also referred to as a "mike" or a "mic", is configured to convert a sound signal into an electrical signal. When making a call or sending voice information, a user may make a sound by moving a human mouth close to the microphone 170C, to input a sound signal to the microphone 170C. At least one microphone 170C may be disposed in the terminal device 100. In some other embodiments, two microphones 170C may be disposed in the terminal device 100, to implement a noise reduction function in addition to collecting a sound signal. In some other embodiments, three, four, or more microphones 170C may alternatively be disposed in the terminal device 100, to collect a sound signal, implement noise reduction, and identify a sound source, to implement a directional recording function, and the like.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The button 190 includes a power button, a volume button, and the like. The button 190 may be a mechanical button, or may be a touch-sensitive button. The terminal device 100 may receive a key input, and generate a key signal input related to a user setting and function control of the terminal device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may correspond to different vibration feedback effects for touch operations performed on different areas of the display 194. Different application scenarios (for example, a time reminder, information receiving, an alarm clock, and a game) may correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the terminal device 100. The terminal device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 may be compatible with an external storage card. The terminal device 100 interacts with a network by using the SIM card, to implement functions such as calling and data communication. In some embodiments, an eSIM, namely, an embedded SIM card, is used for the terminal device 100. The eSIM card may be embedded into the terminal device 100, and cannot be separated from the terminal device 100.

In addition, implementation of the feature story generation method provided in embodiments of this application not only relates to a terminal device side, but also relates to a server side. The server may be disposed in a cloud. For example, the server may be a server configured to generate a news topic story. A specific type of the server is not limited in embodiments of this application.

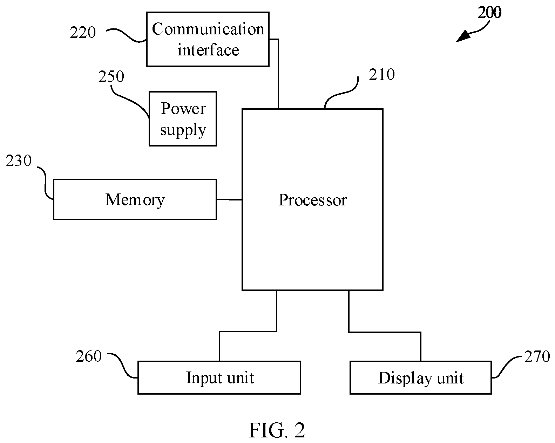

For example, FIG. 2 is a diagram of a structure of a server according to an embodiment of this application. As shown in FIG. 2, the server 200 includes a processor 210 and a communication interface 220. Optionally, the server 200 may further include a memory 230. The processor 210, the communication interface 220, and the memory 230 may communicate with each other through an internal connection path to transfer a control signal and/or a data signal. The memory 230 is configured to store a computer program. The processor 210 is configured to: invoke the computer program from the memory 230 and run the computer program.

The processor 210 and the memory 230 may be integrated into one processing apparatus, or more commonly be components independent of each other. The processor 210 is configured to execute program code stored in the memory 230. During specific implementation, the memory 230 may alternatively be integrated into the processor 210, or may be independent of the processor 210.

In addition, to make functions of the server 200 more complete, the server 200 may further include one or more of an input unit 260, a display unit 270, and the like.

Optionally, the server 200 may further include a power supply 250, configured to supply power to various devices or circuits in the server 200.

It should be understood that the processor 210 in the server 200 shown in FIG. 2 may be a system-on-a-chip SoC. The processor 210 may include a central processing unit (central processing unit, CPU), and may further include another type of processor, for example, a graphics processing unit (graphics processing unit, GPU).

For ease of understanding, in the following embodiments of this application, the terminal device having the structure shown in FIG. 1 and the server having the structure shown in FIG. 2 are used as examples to describe in detail the feature story generation method provided in embodiments of this application with reference to the accompanying drawings and application scenarios.

According to the feature story generation method provided in embodiments of this application, when a user browses news, an interactive, real-time customized, and granularity-variable feature story generation function can be provided to help the user extract core information and improve viewing experience of the user. Specifically, scenarios to which the feature story generation method provided in embodiments of this application may be applied may include the following.

### 1. Scenario of a browser and a leftmost screen

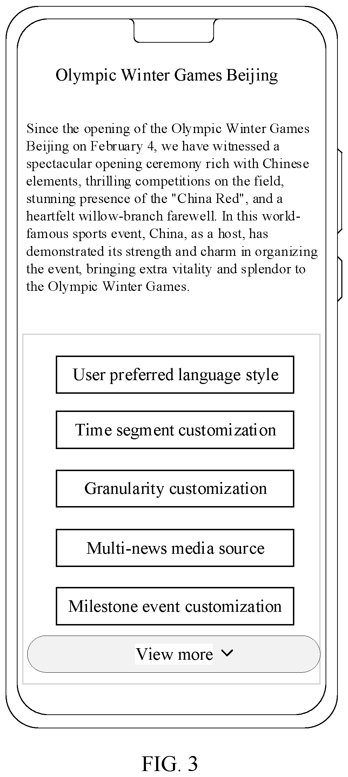

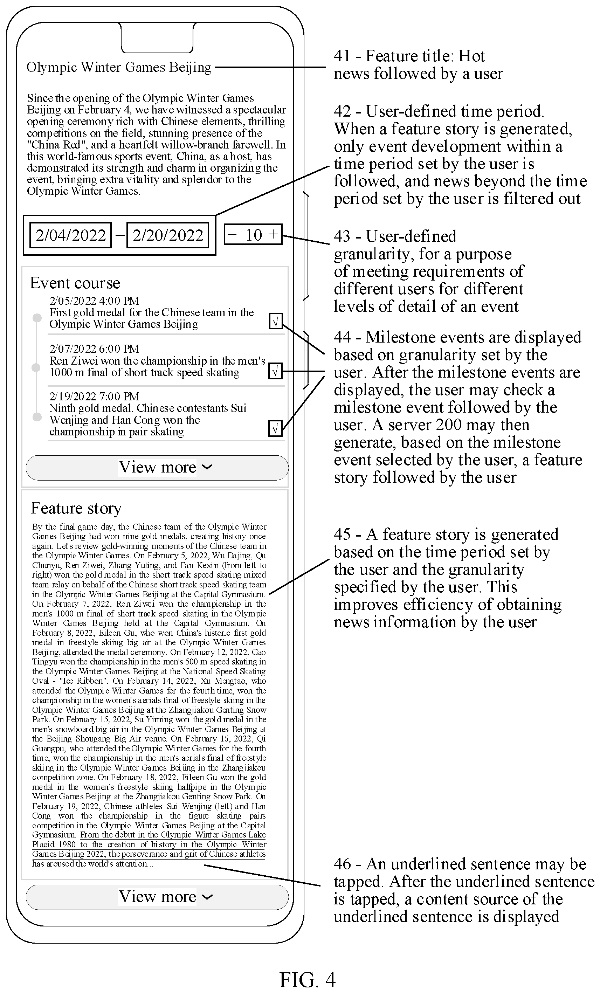

The user may open a hot pushed news entry in a browser or on a leftmost screen to access a related news topic. After access to a home page of the related news topic, the terminal device 100 reminds the user to make universal module selection, including a language style of the user, a time segment, granularity, a news media source, a milestone event, and/or the like. As shown in FIG. 3, FIG. 3 is a diagram of a module selection interface according to an embodiment of this application. FIG. 3 provides five modules: a user preferred language style module, a time segment module, a granularity module, a multi-news media source module, and a milestone event module, for the user to perform setting. After the user performs corresponding setting, the terminal device 100 may obtain information set by the user, and then the terminal device 100 sends the obtained information to the server 200. The server 200 generates a highly generalized, comprehensive, and objective feature story that matches a language habit of the user. The server 200 sends the generated feature story to the terminal device 100. The terminal device 100 may display the feature story in a "feature story" content box. As shown in FIG. 4, FIG. 4 is a diagram of a feature story interface according to an embodiment of this application.

Specifically, on the interface shown in FIG. 4, 41 is a feature title, indicating hot news followed by the user.

42 is a user-defined time period. In this embodiment of this application, after the user sets a time period in the time segment customization module on the interface shown in FIG. 3, the terminal device 100 displays the user-defined time period at a location indicated by 42 on the interface shown in FIG. 4. When the feature story is generated, only event development within the time period set by the user may be followed, and news beyond the time period set by the user may be filtered out.

43 is a user-defined granularity. Similarly, after the user sets granularity in the granularity customization module on the interface shown in FIG. 3, the terminal device 100 displays the user-defined granularity at a location indicated by 43 on the interface shown in FIG. 4. In this embodiment of this application, requirements of different users for different levels of detail of an event may be met by using the user-defined granularity.

44 is an "event course" area. The terminal device 100 may display a corresponding quantity of milestone events in the "event course" area based on the granularity set by the user. For example, if the granularity is 10, 10 milestone events may be displayed in the "event course" area. The user may then select, by checking a milestone event, a milestone event followed by the user. In this way, the server 200 may generate, based on the milestone event selected by the user, a feature story followed by the user.

45 is a feature story generated based on the time period set by the user and the granularity specified by the user. This may improve efficiency of obtaining news information by the user.

The underlined sentence indicated by 46 is a tappable statement in the feature story. After the underlined sentence is tapped, the terminal device 100 may display a content source of the underlined sentence. Specifically, the feature story may include at least one tappable sentence. These tappable sentences may be marked through underlining, or may be marked in different font colors or different background colors. A manner of marking the tappable sentence is not limited in this embodiment of this application. After the user taps these tappable sentences, the terminal device 100 may display a content source of the tapped sentence, in other words, a news release from which the tapped sentence comes.

### 2. Scenario of an app

When using a news app, the user taps a news topic of interest. After access to a home page of the news topic, the news app may similarly display the interface shown in FIG. 3 and remind the user to make universal module selection, to generate a feature story. This helps the user extract core information and improves viewing experience of the user.

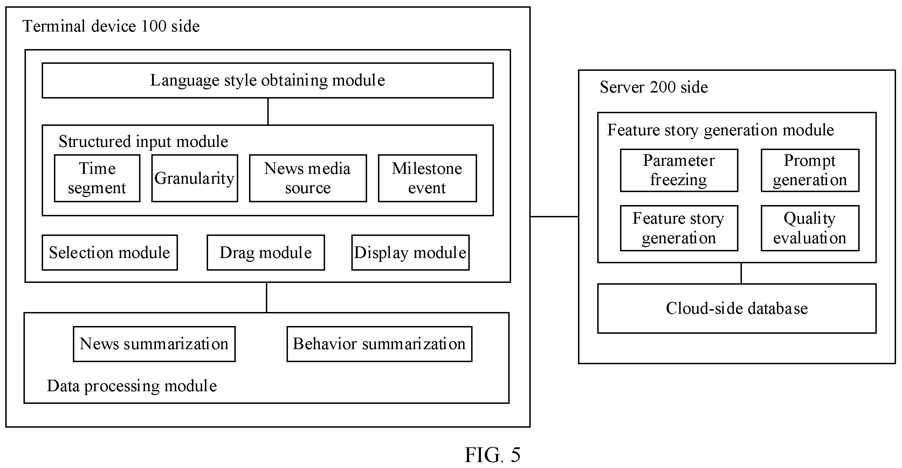

FIG. 5 is a diagram of a system architecture according to an embodiment of this application. As shown in FIG. 5, a terminal device 100 side may include a language style obtaining module, a structured input module, a selection module, a drag module, a display module, and a data processing module. A server 200 side may include a feature story generation module and a cloud-side database.

The following describes functions of the modules.
(1) The language style obtaining module is responsible for collecting usage habit and behavior information of a user for an app on the terminal device 100 side, completing efficient calculation on the terminal device 100 side, converting the information into a tag of a language habit or a language style of the user, and providing a feature story that matches the language style; or the language style obtaining module may further obtain a language style set by the user.
(2) The structured input module is responsible for converting a user-defined input into a structured input parameter, to improve model conversion efficiency and user intention understanding.
(3) The selection module and the drag module are responsible for real-time customized news selection and discarding by the user, to enhance interaction forms.
(4) The display module is configured to display necessary information, and is mainly configured to present a feature story, and provide information elements such as a text, an image, a video, an interaction button, and/or a slider module, for the user.
(5) The data processing module includes two modules: news summarization and behavior summarization, and is configured to receive a sequence of behaviors of the user and feature news selection data.
(6) The feature story generation module is a feature story generation module deployed on the server 200 side, and includes four sub-modules: parameter freezing, prompt generation, feature story generation, and quality evaluation.
(7) The cloud-side database is configured to store training data, user information, and/or the like.

The following describes the feature story generation method provided in embodiments of this application.

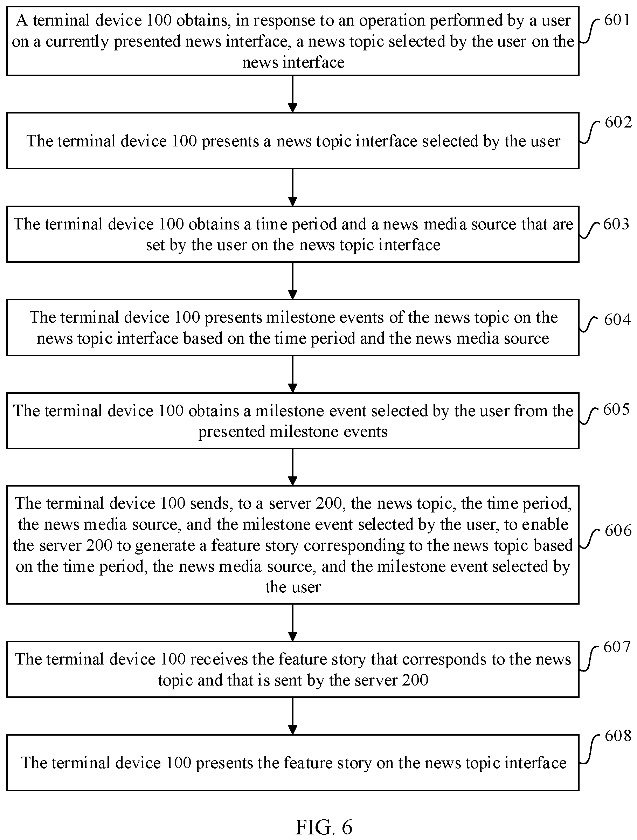

FIG. 6 is a flowchart of a feature story generation method according to an embodiment of this application. As shown in FIG. 6, the feature story generation method may include the following steps.

Step 601: The terminal device 100 obtains, in response to an operation performed by a user on a currently presented news interface, a news topic selected by the user on the news interface.

Specifically, the operation performed by the user on the currently presented news interface may be an operation performed by the user to select the news topic on the news interface. For example, the user taps the news topic, or the user touches and holds the news topic.

Step 602: The terminal device 100 presents a news topic interface selected by the user.

Specifically, the news topic interface presented by the terminal device 100 may be shown in FIG. 3. The interface shown in FIG. 3 includes the time segment customization module and the multi-news media source module. The user may set a time period by using the time segment customization module, and set a news media source by using the multi-news media source module.

Step 603: The terminal device 100 obtains the time period and the news media source that are set by the user on the news topic interface.

Step 604: The terminal device 100 presents milestone events of the news topic on the news topic interface based on the time period and the news media source.

Refer to FIG. 4. Specifically, after the terminal device 100 obtains the time period and the news media source, the terminal device 100 may present, on the news topic interface, milestone events that are within the time period and that are obtained from the news media source.

In some examples, before step 604, the terminal device 100 may further obtain granularity set by the user on the news topic interface. In this way, step 604 may be: The terminal device 100 presents a first quantity of milestone events of the news topic on the news topic interface based on the time period and the news media source. The first quantity includes a quantity corresponding to the granularity. Refer to FIG. 3. Specifically, the user may tap the granularity customization module to set the granularity. After obtaining the granularity set by the user on the interface shown in FIG. 3, the terminal device 100 may display, at the location indicated by 43 on the interface shown in FIG. 4, the granularity set by the user. The terminal device 100 may then display the first quantity of milestone events at a location indicated by 44 on the interface shown in FIG. 4. The first quantity may be the quantity corresponding to the granularity.

Step 605: The terminal device 100 obtains a milestone event selected by the user from the presented milestone events.

Refer to FIG. 4. After the terminal device 100 presents the milestone events, the user may select, by checking, a milestone event followed by the user; or may remove, by unchecking, a milestone event, not followed by the user, from the milestone events presented by the terminal device 100. After the user selects the milestone event, the terminal device 100 obtains the milestone event selected by the user.

Step 606: The terminal device 100 sends, to the server 200, the news topic, the time period, the news media source, and the milestone event selected by the user, to enable the server 200 to generate a feature story corresponding to the news topic based on the time period, the news media source, and the milestone event selected by the user.

In some examples, after step 606, the method may further include the following steps.

Step 607: The terminal device 100 receives the feature story that corresponds to the news topic and that is sent by the server 200.

Step 608: The terminal device 100 presents the feature story on the news topic interface.

In other words, after generating the feature story corresponding to the news topic, the server 200 sends the generated feature story to the terminal device 100. After the terminal device 100 receives the feature story sent by the server 200, the terminal device 100 may present the feature story on the news topic interface. As shown in FIG. 4, the terminal device 100 may present the feature story at a location indicated by 45.

In some examples, after step 608, the terminal device 100 may further obtain a milestone event re-selected by the user from the presented milestone events, and send, to the server 200, the milestone event re-selected by the user, to enable the server 200 to update the feature story corresponding to the news topic based on the milestone event re-selected by the user. In other words, in this embodiment, if the user re-selects a milestone event, after the terminal device 100 sends the re-selected milestone event to the server 200, the server 200 may update the feature story corresponding to the news topic based on the milestone event re-selected by the user.

In addition, in some examples, after step 608, the terminal device 100 may further obtain a time period and/or a news media source modified by the user on the news topic interface. The terminal device 100 may then present updated milestone events on the news topic interface based on the modified time period and/or news media source, and obtain a milestone event re-selected by the user from the updated milestone events. The terminal device 100 may then send the milestone event re-selected by the user and the modified time period and/or news media source to the server, to enable the server 200 to update the feature story corresponding to the news topic based on the milestone event re-selected by the user and the modified time period and/or news media source.

In other words, the user may change the time period and/or news media source at any time. After obtaining a setting changed by the user, the terminal device 100 may send, to the server 200, the setting changed by the user, to enable the server 200 to update the feature story. This may provide an interactive and real-time customized feature story generation function and improve viewing experience of the user.

It may be understood that after the server 200 updates the feature story corresponding to the news topic, the server 200 may send the updated feature story to the terminal device 100. After receiving the updated feature story, the terminal device 100 may present the updated feature story at the location indicated by 45 on the interface shown in FIG. 4.

In the feature story generation method, the terminal device 100 obtains, in response to the operation performed by the user on the currently presented news interface, the news topic selected by the user on the news interface, and presents the news topic interface selected by the user. The terminal device 100 then obtains the time period and the news media source that are set by the user on the news topic interface, and presents the milestone events of the news topic on the news topic interface based on the time period and the news media source. Finally, the terminal device 100 obtains the milestone event selected by the user from the presented milestone events, and sends, to the server 200, the news topic, the time period, the news media source, and the milestone event selected by the user. In this way, the server 200 may generate the feature story corresponding to the news topic based on the time period, the news media source, and the milestone event selected by the user, so that when the user browses news, an interactive and real-time customized feature story generation function can be provided to help the user extract core information and improve news viewing experience of the user.

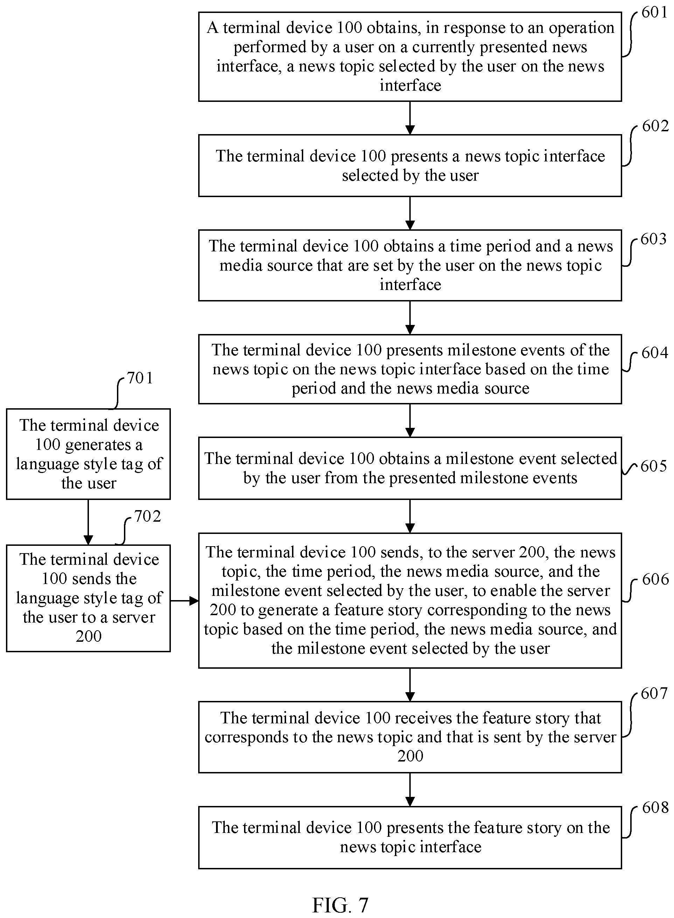

FIG. 7 is a flowchart of a feature story generation method according to another embodiment of this application. As shown in FIG. 7, the feature story generation method provided in the embodiment shown in FIG. 6 in this application may further include the following steps.

Step 701: The terminal device 100 generates a language style tag of the user.

Specifically, that the terminal device 100 generates the language style tag of the user may be: The terminal device 100 generates the language style tag of the user based on a historical behavior and a usage habit of the user; or the terminal device 100 obtains a language style selected by the user on the news topic interface, and generates the language style tag of the user based on the language style selected by the user.

Step 702: The terminal device 100 sends the language style tag of the user to the server 200.

In this way, in step 606, the feature story that corresponds to the news topic and that is generated by the server 200 may be a feature story that corresponds to the news topic and that matches a language style of the user.

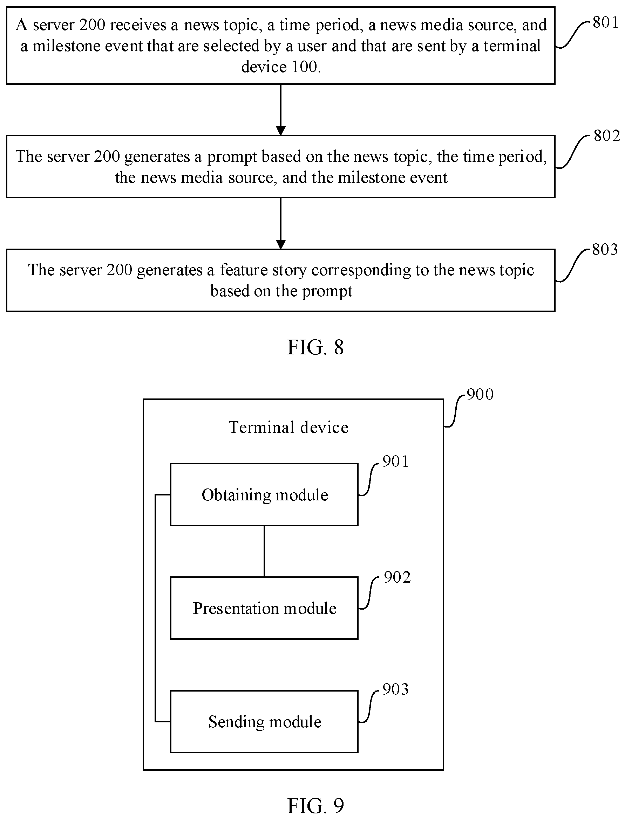

FIG. 8 is a flowchart of a feature story generation method according to still another embodiment of this application. As shown in FIG. 8, the feature story generation method may include the following steps.

Step 801: The server 200 receives a news topic, a time period, a news media source, and a milestone event that are selected by a user and that are sent by the terminal device 100.

Step 802: The server 200 generates a prompt based on the news topic, the time period, the news media source, and the milestone event.

Step 803: The server 200 generates a feature story corresponding to the news topic based on the prompt.

In some examples, the server 200 may further receive a language style tag of the user sent by the terminal device 100. In this way, step 803 may be: The server 200 generates, based on the prompt, a feature story that corresponds to the news topic and that matches the language style tag of the user.

In addition, in some examples, after step 803, the server 200 may further send the feature story to the terminal device 100, to enable the terminal device 100 to present the feature story on a news topic interface.

In some examples, after sending the feature story to the terminal device 100, the server 200 may further receive a milestone event that is re-selected by the user and that is sent by the terminal device 100, and update the feature story corresponding to the news topic based on the milestone event re-selected by the user.

In some other examples, after sending the feature story to the terminal device 100, the server 200 may further receive a milestone event re-selected by the user and a time period and/or a news media source modified by the user, that are sent by the terminal device 100, and update the feature story corresponding to the news topic based on the milestone event re-selected by the user and the time period and/or news media source modified by the user.

In the foregoing feature story generation method, the server 200 receives the news topic, the time period, the news media source, and the milestone event that are selected by the user and that are sent by the terminal device 100, and then generates the prompt based on the news topic, the time period, the news media source, and the milestone event. Finally, the server 200 generates the feature story corresponding to the news topic based on the prompt, so that when the user browses news, an interactive, real-time customized, and granularity-variable feature story generation function can be provided to help the user extract core information and improve viewing experience of the user.

The following continues to describe, by using a specific example, the feature story generation method provided in embodiments of this application.

Step 1: When the user browses a news interface, the terminal device 100 displays, in response to detecting an operation performed by the user to select a news topic "Olympic Winter Games Beijing" on the news interface, a news topic interface "Olympic Winter Games Beijing". In this embodiment, the news topic interface "Olympic Winter Games Beijing" may be shown in FIG. 3. On the interface shown in FIG. 3, the user may make selection on modules such as the "user preferred language style" module, the "time segment customization" module, the "granularity customization" module, the "multimedia news source" module, and the "milestone event customization" module. In this process, the terminal device 100 automatically generates the language style tag of the user, including language style tags, such as "serious", "humorous", "easygoing", "middle age", "old age", "young age", and/or "tender age", to implement generation of a more personalized and customized feature story.

In this example, the user does not set a user preferred language style, and the terminal device 100 may generate the language style tag, "serious" of the user based on the historical behavior and the usage habit of the user, and obtain a time period "2/04/2022-2/20/2022" set by the user and granularity set by the user as 10. In this way, the terminal device 100 may display 10 milestone events within the time period based on the time period and the granularity that are set by the user, and then the user selects three milestone events from the milestone events displayed by the terminal device 100: "First gold medal for the Chinese team in the Olympic Winter Games Beijing", "Ren Ziwei won the championship in the men's 1000 m final of short track speed skating", and "Ninth gold medal. Chinese contestants Sui Wenjing and Han Cong won the championship in pair skating". The user sets that the news media source is not screened, and the terminal device 100 accepts all news media by default.

Step 2: The terminal device 100 transmits the obtained user-defined information to the data processing module, and the data processing module parses and summarizes news input.

Step 3: The data processing module sends the summarized information to the server 200, to generate a feature story. The server 200 first performs parameter freezing based on the news topic. Specifically, after the server 200 receives the information (including the news topic, the time period, the news media source, and the milestone event that are selected by the user) sent by the data processing module in the terminal device 100, an AIGC model deployed in the server 200 freezes a parameter of the AIGC model based on the news topic included in the information, to ensure efficient generation of the feature story. Next, the server 200 constructs a prompt, as an input of the AIGC model, based on the foregoing information and the language style tag of the user. In this example, the prompt may be: "You are a feature story generation model. A current feature is "Olympic Winter Games Beijing", and a current user selects the following milestone event, with a language style "serious". Generate a customized feature story based on the foregoing content. The content needs to be objective and comprehensive and presents a development course and a subsequent effect of the event." The AIGC model then generates a customized feature story based on the prompt to meet news browsing requirements of the user. Finally, the server 200 may further score and optimize quality of the generated feature story in an automated manner.

Step 4: The server 200 sends the generated feature story to the terminal device 100, and the terminal device 100 presents the feature story.

Step 5: The user enjoys an all-round news browsing experience of the news topic "Olympic Winter Games Beijing" on the terminal device 100.

After step 5, in a process of browsing the news topic, the user may further re-select a milestone event, or modify the time period and/or news media source. After obtaining information updated by the user, the terminal device 100 sends the updated information to the server 200 through the data processing module. The server 200 may update the feature story based on the updated information.

According to the feature story generation method provided in embodiments of this application, when the user browses news, an interactive, real-time customized, and granularity-variable feature story generation function can be provided to help the user extract core information and improve viewing experience and services of the user, and news browsing requirements of different users in different scenarios may be met, thereby improving information obtaining efficiency and richness in all aspects.

Existing related technologies do not support selection of customized modules such as the time period, the granularity, the keyword, and/or the news source. The feature story generation method provided in embodiments of this application may implement customized settings of the foregoing modules, thereby implementing diversified interaction with the user. In existing related technologies, only a visual summary of news entries that is rigid and unmodifiable can be provided for the user, and a highly generalized feature story cannot be generated in real time. The feature story generation method provided in embodiments of this application can provide comprehensive, objective, and real-time variable key information extraction and content overview of the feature news by using the AIGC model. In existing related technologies, customized news overview content that matches the language style and habit of the user cannot be provided on a news browsing interface of a feature type. According to the feature story generation method provided in embodiments of this application, the language style tag of the user can be generated on the terminal device 100 side, to enable the server 200 to generate a feature story that matches the language style tag of the user, thereby improving viewing experience of the user. In conclusion, the feature story generation method provided in embodiments of this application can greatly improve news browsing efficiency and interest of the user, and possesses high value in use and promotion.

It can be understood that some or all of the steps or operations in the foregoing embodiments are merely examples, and other operations or variants of various operations may be further performed in embodiments of this application. In addition, the steps may be performed in another order different from that presented in the foregoing embodiments, and not all the operations in the foregoing embodiments may be performed.

It can be understood that, to implement the foregoing functions, a terminal device includes a corresponding hardware module and/or software module for performing the functions. Algorithm steps in the examples described with reference to embodiments disclosed in this application can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In embodiments, the terminal device may be divided into functional modules based on the foregoing method embodiments. For example, each functional module may be obtained through division based on each corresponding function, or two or more functions may be integrated into one module. The integrated module may be implemented in a form of hardware. It should be noted that division into the modules in embodiments is an example and is merely logical function division. There may be another division manner during actual implementation.

FIG. 9 is a diagram of a structure of a terminal device according to another embodiment of this application. When each functional module is obtained through division based on each corresponding function, FIG. 9 illustrates a possible composition diagram of a terminal device 900 in this embodiment. As shown in FIG. 9, the terminal device 900 may include: an obtaining module 901, a presentation module 902, and a sending module 903.

The obtaining module 901 is configured to obtain, in response to an operation performed by a user on a currently presented news interface, a news topic selected by the user on the news interface.

The presentation module 902 is configured to present a news topic interface selected by the user.

The obtaining module 901 is further configured to obtain a time period and a news media source that are set by the user on the news topic interface.

The presentation module 902 is further configured to present milestone events of the news topic on the news topic interface based on the time period and the news media source.

The obtaining module 901 is further configured to obtain a milestone event selected by the user from the presented milestone events.

The sending module 903 is configured to send, to a server, the news topic, the time period, the news media source, and the milestone event selected by the user, to enable the server to generate a feature story corresponding to the news topic based on the time period, the news media source, and the milestone event selected by the user.

It should be noted that all related content of the steps in the method embodiment shown in FIG. 6 in this application may be cited in function descriptions of corresponding functional modules. Details are not described herein again.

The terminal device 900 provided in this embodiment is configured to perform the feature story generation method provided in the embodiment shown in FIG. 6 in this application, and therefore can achieve a same effect as the foregoing method.

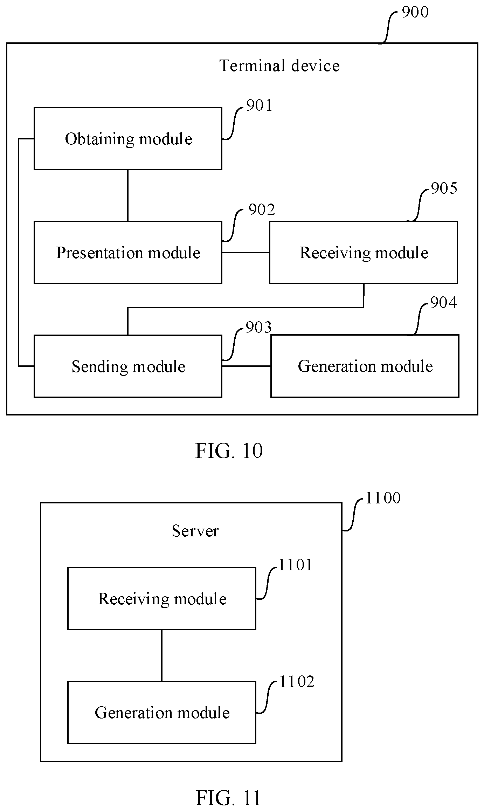

FIG. 10 is a diagram of a structure of a terminal device according to still another embodiment of this application. A difference from the terminal device shown in FIG. 9 lies in that in the terminal device shown in FIG. 10, the obtaining module 901 is further configured to obtain, before the presentation module 902 presents the milestone events of the news topic on the news topic interface, granularity set by the user on the news topic interface.

In this way, the presentation module 902 is specifically configured to present a first quantity of milestone events of the news topic on the news topic interface based on the time period and the news media source. The first quantity includes a quantity corresponding to the granularity.

Further, the terminal device 900 may include a generation module 904.

The generation module 904 is configured to generate a language style tag of a user.

The sending module 903 is further configured to send the language style tag of the user to the server. The feature story that corresponds to the news topic and that is generated by the server includes a feature story that corresponds to the news topic and that matches a language style of the user.

Specifically, the generation module 904 is configured to generate the language style tag of the user based on a historical behavior and a usage habit of the user; or obtain a language style selected by the user on the news topic interface, and generate the language style tag of the user based on the language style selected by the user.

Further, the terminal device 900 may include a receiving module 905.

The receiving module 905 is further configured to receive, after the fever module 903 sends, to the server, the news topic, the time period, the news media source, and the milestone event selected by the user, the feature story that corresponds to the news topic and that is sent by the server.

The presentation module 902 is specifically configured to present the feature story on the news topic interface.

The obtaining module 901 is further configured to obtain, after the presentation module 902 presents the feature story on the news topic interface, a milestone event re-selected by the user from the presented milestone events.

The sending module 903 is further configured to send, to the server, the milestone event re-selected by the user, to enable the server to update the feature story corresponding to the news topic based on the milestone event re-selected by the user.

In some examples, the obtaining module 901 is further configured to obtain, after the presentation module 902 presents the feature story on the news topic interface, a time period and/or a news media source modified by the user on the news topic interface.

The presentation module 902 is further configured to present updated milestone events on the news topic interface based on the modified time period and/or news media source.

The obtaining module 901 is further configured to obtain a milestone event re-selected by the user from the updated milestone events.

The sending module 903 is further configured to send, to the server, the milestone event re-selected by the user and the modified time period and/or news media source, to enable the server to update the feature story corresponding to the news topic based on the milestone event re-selected by the user and the modified time period and/or news media source.

It should be noted that all related content of the steps in the method embodiments shown in FIG. 6 and FIG. 7 in this application may be cited in function descriptions of corresponding functional modules. Details are not described herein again.

The terminal device 900 provided in this embodiment is configured to perform the feature story generation method provided in the embodiments shown in FIG. 6 and FIG. 7 in this application, and therefore can achieve a same effect as the foregoing method.

It should be understood that the terminal device 900 may correspond to the terminal device 100 shown in FIG. 1. Functions of the sending module 903 and the receiving module 905 may be implemented by the processor 110, the antenna 1, and the mobile communication module 150 in the terminal device 100 shown in FIG. 1, and/or by the processor 110, the antenna 2, and the wireless communication module 160. Functions of the obtaining module 901, the presentation module 902, and the generation module 904 may be implemented by the processor 110, the touch sensor 180K, and/or the display 194 in the terminal device 100 shown in FIG. 1.

Corresponding to the architecture shown in FIG. 5, the generation module 904 may implement functions of the language style obtaining module in the architecture shown in FIG. 5, the obtaining module 901 may implement functions of the structured input module, the selection module, and the drag module, the presentation module 902 may implement functions of the display module, and the obtaining module 901 and the sending module 903 may implement functions of the data processing module.

When an integrated unit is used, the terminal device 900 may include a processing module, a storage module, and a communication module.

The processing module may be configured to control and manage actions of the terminal device 900, for example, may be configured to support the terminal device 900 in performing the steps performed by the foregoing modules. The storage module may be configured to support the terminal device 900 in storing program code, data, and the like. The communication module may be configured to support communication between the terminal device 900 and another device.

The processing module may be a processor or a controller, and may implement or execute various example logic blocks, modules, and circuits described with reference to content disclosed in this application. The processor may alternatively be a combination for implementing a computing function, for example, a combination including one or more microprocessors or a combination of a digital signal processor (digital signal processor, DSP) and a microprocessor. The storage module may be a memory. The communication module may be specifically a device, for example, a radio frequency circuit, a Bluetooth chip, and/or a Wi-Fi chip, that interacts with another electronic device.

In an embodiment, when the processing module is a processor and the storage module is a memory, the terminal device 900 in this embodiment may be a device having the structure shown in FIG. 1.

Similarly, it can be understood that, to implement the foregoing functions, the server includes a corresponding hardware module and/or software module for performing the functions. Algorithm steps in the examples described with reference to embodiments disclosed in this application can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In embodiments, the server may be divided into functional modules based on the foregoing method embodiments. For example, each functional module may be obtained through division based on each corresponding function, or two or more functions may be integrated into one module. The integrated module may be implemented in a form of hardware. It should be noted that division into the modules in embodiments is an example and is merely logical function division. There may be another division manner during actual implementation.

FIG. 11 is a diagram of a structure of a server according to another embodiment of this application. When each functional module is obtained through division based on each corresponding function, FIG. 11 illustrates a possible composition diagram of a server 1100 in this embodiment. As shown in FIG. 11, the server 1100 may include: a receiving module 1101, and a generation module 1102.

The receiving module 1101 is configured to receive a news topic, a time period, a news media source, and a milestone event that are selected by a user and sent by a terminal device.

The generation module 1102 is configured to: generate a prompt based on the news topic, the time period, the news media source, and the milestone event; and generate a feature story corresponding to the news topic based on the prompt.

It should be noted that all related content of the steps in the method embodiment shown in FIG. 8 in this application may be cited in function descriptions of corresponding functional modules. Details are not described herein again.

The server 1100 provided in this embodiment is configured to perform the feature story generation method provided in the embodiment shown in FIG. 8 in this application, and therefore can achieve a same effect as the foregoing method.

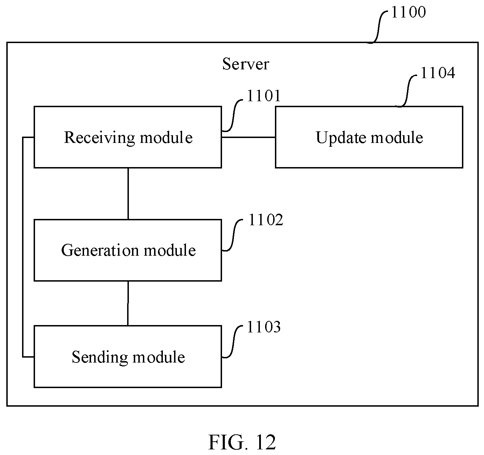

FIG. 12 is a diagram of a structure of a server according to still another embodiment of this application. A difference from the server shown in FIG. 11 lies in that in the server shown in FIG. 12, the receiving module 1101 is further configured to receive a language style tag of the user sent by the terminal device.

The generation module 1102 is specifically configured to generate, based on the prompt, a feature story that corresponds to the news topic and that matches the language style tag of the user.

In some examples, the server 1100 may further include a sending module 1103.

The sending module 1103 is configured to send, after the generation module 1102 generates the feature story corresponding to the news topic, the feature story to the terminal device, to enable the terminal device to present the feature story on a news topic interface.

In some examples, the server 1100 may further include an update module 1104.

The receiving module 1101 is further configured to receive, after the sending module 1103 sends the feature story to the terminal device, a milestone event that is re-selected by the user and that is sent by the terminal device.

The update module 1104 is configured to update the feature story corresponding to the news topic based on the milestone event re-selected by the user.

The receiving module 1101 is further configured to receive, after the sending module 1103 sends the feature story to the terminal device, a milestone event re-selected by the user and a time period and/or a news media source modified by the user, that are sent by the terminal device.

The update module 1104 is configured to update the feature story corresponding to the news topic based on the milestone event re-selected by the user and the time period and/or news media source modified by the user.

It should be noted that all related content of the steps in the method embodiment shown in FIG. 8 in this application may be cited in function descriptions of corresponding functional modules. Details are not described herein again.

The server 1100 provided in this embodiment is configured to perform the feature story generation method provided in the embodiment shown in FIG. 8 in this application, and therefore can achieve a same effect as the foregoing method.

It should be understood that the server 1100 may correspond to the server 200 shown in FIG. 2. Functions of the receiving module 1101 and the sending module 1103 may be implemented by the processor 210 and the communication interface 220 in the server 200 shown in FIG. 2. Functions of the generation module 1102 and the update module 1104 may be implemented by the processor 210 in the server 200 shown in FIG. 2.

Corresponding to the system architecture shown in FIG. 5, the generation module 1102 may implement functions of the feature story generation module in the system architecture shown in FIG. 5.

When an integrated unit is used, the server 1100 may include a processing module, a storage module, and a communication module.

The processing module may be configured to control and manage actions of the server 1100, for example, may be configured to support the server 1100 in performing the steps performed by the foregoing modules. The storage module may be configured to support the server 1100 in storing program code, data, and the like. The communication module may be configured to support communication between the server 1100 and another device.

The processing module may be a processor or a controller, and may implement or execute various example logic blocks, modules, and circuits described with reference to content disclosed in this application. The processor may alternatively be a combination for implementing a computing function, for example, a combination including one or more microprocessors or a combination of a digital signal processor (digital signal processor, DSP) and a microprocessor. The storage module may be a memory. The communication module may be specifically a device, for example, a radio frequency circuit, a Bluetooth chip, and/or a Wi-Fi chip, that interacts with another electronic device.

In an embodiment, when the processing module is a processor and the storage module is a memory, the server 1600 in this embodiment may be a device having the structure shown in FIG. 2.

An embodiment of this application further provides a computer-readable storage medium. The computer-readable storage medium stores a computer program. When the computer program is run on a computer, the computer is enabled to perform the methods provided in the embodiments shown in FIG. 6 and FIG. 7 in this application.

An embodiment of this application further provides a computer-readable storage medium. The computer-readable storage medium stores a computer program. When the computer program is run on a computer, the computer is enabled to perform the method provided in the embodiment shown in FIG. 8 in this application.

An embodiment of this application further provides a computer program product. The computer program product includes a computer program. When the computer program is run on a computer, the computer is enabled to perform the methods provided in the embodiments shown in FIG. 6 and FIG. 7 in this application.

An embodiment of this application further provides a computer program product. The computer program product includes a computer program. When the computer program is run on a computer, the computer is enabled to perform the method provided in the embodiment shown in FIG. 8 in this application.

In embodiments of this application, "at least one" means one or more, and "a plurality of" means two or more. The term "and/or" describes an association between associated objects and represents that three relationships may exist. For example, A and/or B may represent the following cases: Only A exists, both A and B exist, and only B exists, where A and B may be singular or plural. The character "/" generally indicates an "or" relationship between associated objects. "At least one of the following items" and a similar expression thereof means any combination of these items, including any combination of singular items or plural items. For example, at least one of a, b, and c may indicate a, b, c, a and b, a and c, b and c, or a, b, and c, where a, b, and c may be singular or plural.

A person of ordinary skill in the art may be aware that, with reference to embodiments disclosed in this specification, described units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, when any function is implemented in a form of a software functional unit and sold or used as an independent product, the function may be stored in a computer-readable storage medium. Based on such an understanding, the technical solutions of this application essentially, the part contributing to conventional technologies, or a part of the technical solutions may be implemented in a form of a software product. The computer software product is stored in a storage medium, and includes several instructions for enabling a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application. Any variation or replacement readily figured out by a person skilled in the art within the technical scope disclosed in this application shall fall within the protection scope of this application. The protection scope of this application shall be subject to the protection scope of the claims.

## Claims

1. A feature story generation method, comprising:
obtaining, in response to an operation performed by a user on a currently presented news interface, a news topic selected by the user on the news interface;
presenting a news topic interface selected by the user;
obtaining a time period and a news media source that are set by the user on the news topic interface;
presenting milestone events of the news topic on the news topic interface based on the time period and the news media source;
obtaining a milestone event selected by the user from the presented milestone events; and
sending, to a server, the news topic, the time period, the news media source, and the milestone event selected by the user, to enable the server to generate a feature story corresponding to the news topic based on the time period, the news media source, and the milestone event selected by the user.

2. The method according to claim 1, wherein before the presenting the milestone events of the news topic on the news topic interface based on the time period and the news media source, the method further comprises:
obtaining granularity set by the user on the news topic interface; and
the presenting the milestone events of the news topic on the news topic interface based on the time period and the news media source comprises:
presenting a first quantity of milestone events of the news topic on the news topic interface based on the time period and the news media source, wherein the first quantity comprises a quantity corresponding to the granularity.

3. The method according to claim 1, further comprising:
generating a language style tag of the user; and
sending the language style tag of the user to the server, wherein the feature story that corresponds to the news topic and that is generated by the server comprises a feature story that corresponds to the news topic and that matches a language style of the user.

4. The method according to claim 3, wherein the generating the language style tag of the user comprises:
generating the language style tag of the user based on a historical behavior and a usage habit of the user; or
obtaining a language style selected by the user on the news topic interface, and generating the language style tag of the user based on the language style selected by the user.

5. The method according to any one of claims 1 to 4, wherein after the sending, to the server, the news topic, the time period, the news media source, and the milestone event selected by the user, the method further comprises:
receiving the feature story that corresponds to the news topic and that is sent by the server; and
presenting the feature story on the news topic interface.

6. The method according to claim 5, wherein after the presenting the feature story on the news topic interface, the method further comprises:
obtaining a milestone event re-selected by the user from the presented milestone events; and
sending, to the server, the milestone event re-selected by the user, to enable the server to update the feature story corresponding to the news topic based on the milestone event re-selected by the user.

7. The method according to claim 5, wherein after the presenting the feature story on the news topic interface, the method further comprises:
obtaining a time period and/or a news media source modified by the user on the news topic interface;
presenting updated milestone events on the news topic interface based on the modified time period and/or news media source;
obtaining a milestone event re-selected by the user from the updated milestone events; and
sending, to the server, the milestone event re-selected by the user and the modified time period and/or news media source, to enable the server to update the feature story corresponding to the news topic based on the milestone event re-selected by the user and the modified time period and/or news media source.

8. A feature story generation method, comprising:
receiving, by a server, a news topic, a time period, a news media source, and a milestone event that are selected by a user and that are sent by a terminal device;
generating a prompt based on the news topic, the time period, the news media source, and the milestone event; and
generating a feature story corresponding to the news topic based on the prompt.

9. The method according to claim 8, further comprising:
receiving a language style tag of the user sent by the terminal device; and
the generating the feature story corresponding to the news topic based on the prompt comprises:
generating, based on the prompt, a feature story that corresponds to the news topic and that matches the language style tag of the user.

10. The method according to claim 8, wherein after the generating the feature story corresponding to the news topic based on the prompt, the method further comprises:
sending the feature story to the terminal device, to enable the terminal device to present the feature story on a news topic interface.

11. The method according to claim 10, wherein after the sending the feature story to the terminal device, the method further comprises:
receiving a milestone event that is re-selected by the user and that is sent by the terminal device; and
updating the feature story corresponding to the news topic based on the milestone event re-selected by the user.

12. The method according to claim 10, wherein after the sending the feature story to the terminal device, the method further comprises:
receiving a milestone event re-selected by the user and a time period and/or a news media source modified by the user, that are sent by the terminal device; and
updating the feature story corresponding to the news topic based on the milestone event re-selected by the user and the time period and/or news media source modified by the user.

13. A feature story generation apparatus, comprising:
an obtaining module, configured to obtain, in response to an operation performed by a user on a currently presented news interface, a news topic selected by the user on the news interface;
a presentation module, configured to present a news topic interface selected by the user, wherein
the obtaining module is further configured to obtain a time period and a news media source that are set by the user on the news topic interface;
the presentation module is further configured to present milestone events of the news topic on the news topic interface based on the time period and the news media source; and
the obtaining module is further configured to obtain a milestone event selected by the user from the presented milestone events; and
a sending module, configured to send, to a server, the news topic, the time period, the news media source, and the milestone event selected by the user, to enable the server to generate a feature story corresponding to the news topic based on the time period, the news media source, and the milestone event selected by the user.

14. A feature story generation apparatus, comprising:
a receiving module, configured to receive a news topic, a time period, a news media source, and a milestone event that are selected by a user and sent by a terminal device; and
a generation module, configured to: generate a prompt based on the news topic, the time period, the news media source, and the milestone event; and generate a feature story corresponding to the news topic based on the prompt.

15. A terminal device, comprising:
one or more processors, a memory, a plurality of applications, and one or more computer programs, wherein the one or more computer programs are stored in the memory, the one or more computer programs comprise instructions, and when the instructions are executed by the terminal device, the terminal device is enabled to perform the method according to any one of claims 1 to 7.

16. A server, comprising:
one or more processors, a memory, a plurality of applications, and one or more computer programs, wherein the one or more computer programs are stored in the memory, the one or more computer programs comprise instructions, and when the instructions are executed by the server, the server is enabled to perform the method according to any one of claims 8 to 12.

17. A computer-readable storage medium, wherein the computer-readable storage medium stores a computer program, and when the computer program is run on a computer, the computer is enabled to perform the method according to any one of claims 1 to 7.

18. A computer-readable storage medium, wherein the computer-readable storage medium stores a computer program, and when the computer program is run on a computer, the computer is enabled to perform the method according to any one of claims 8 to 12.
